# EUROPEAN PATENT APPLICATION

(11) **EP 1 022 581 A2**
(43) Date of publication of application: **26.07.2000**
(21) Application number: 00830038.6
(22) Date of filing: 21.01.2000
(51) Int. Cl.: G01S 13/93, G08G 1/16, G01S 13/74

(54) **A radar system for cooperative targets**

(30) Priority: 21.01.1999 IT RM990038
(71) Applicant: Associazione Vito Volterra, 00133 Roma (IT)
(72) Inventor: Galati, Gaspare, 00162 Rome (IT); Ferri, Mauro, 00040 Montecompatri (RM) (IT)
(74) Representative: Tonon, Gilberto

(57) **Abstract**

A system for detecting, localising and classifying co-operative objects in particular vehicles and the fixed obstacles present on roads and highways, using as sensors radar receiver/transmitter having small dimensions to be installed on vehicles or fixed locations. Each sensor is connected to a subsystem for the processing of information and the display of information.

The system is moreover capable of improving the road safety, in particular in respect of the danger of collisions between vehicles or between vehicles and obstacles (these latter being either permanent or temporary).

## Description

The present invention relates to a radar surveillance system for use on road vehicles or fixed installations capable of detecting vehicles or obstacles present in a space before the vehicle itself or with respect to a fixed installation up to a distance necessary for the traffic safety or for its efficient management, in any visibility condition.

This invention falls in the field of the detection and classification systems for vehicles, such field including systems for avoiding collisions with vehicles or obstacles present on the roadway, and systems for the automatic guidance of the vehicle itself. The object of the present invention is to overcome the limitation deriving from the state of the art for the surveillance of vehicles, limitation caused substantially by the use of a single radar sensor for non-co-operating objects that involves two kinds of problems. The first one relates to the discrimination of useful objects (vehicles, obstacles) from the clutter (the remainder of the road scenario), well known to the persons skilled in this field and referred to by them as the problem of detection and localisation of targets in clutter. The second kind of problems is caused by the interference between the strong signal irradiated by the radar, which in a near future will be several or tens of units in a given stretch of road or highway amounting to hundreds of meters, and the weak radar echo at the same wavelength (or near the same wavelength). All this is discussed, among others, in the following documents:
[1] L.H. Ericsson, B.O. s : "A High Performance Automotive Radar for Automatic AICC", IEEE International Radar Conference, 8^{th}-11^{th} May 1995, Washington, USA, pages 380-385 1995.
[2] H. Rohling, M. Meinecke, M. Klotz, R. Mende: "Experiences with an Experimental Car Controlled by 77 GHz Radar Sensor", International Radar Symposium IRS '98, 15^{th}-17^{th} September 1998, München, Germany, pages 345-354
[3] K. Winter, B. Lucas, H., et al.: " A Compact Radar Sensor and Control Unit for Adaptive Cruise Control", International Radar Symposium IRS '98, 15^{th}-17^{th} September 1998, München, Germany, pages 355-362.

The present radar surveillance systems to be installed aboard of cars are heavily penalised by the scarce resolution and precision of the sensor, by multipath phenomena, i.e., of interference with signals reflected by terrain, of masking caused by the unavoidable presence of interposed vehicles and finally by the difficult of a prompt identification of targets in the interest of safety, in particular in respect of dangerous turns that, on the contrary, can be immediately displayed with the system object of the present invention. In a near future, the use of radar surveillance systems to be installed aboard or cars will be limited by their mutual interference, caused by the single frequency band utilised by them both in transmission and reception.

The object of the present invention is therefore a radar surveillance system for co-operative targets for the improvement of the safety and efficiency of road traffic comprised of radar sensors installed aboard of vehicles or on fixed structures, the operation of which is based on the reception of harmonics of the transmitted signal; in the preferred embodiment, the second and the third harmonic are used.

The radar sensor according to the present invention is therefore constituted of:
A) A small radar operating at the fundamental frequency F, hereinafter identified as "master radar" to be installed aboard of the vehicle, preferably in a non visible manner (for instance at the interior of a headlight projector) or, in the case of fixed installations on a trussed pole, a simple pole, or the like, that includes along the usual receiver at the fundamental frequency, two simple additional radar receivers, the first one tuned at a frequency double of the fundamental, namely 2F, the second one tuned at a frequency triple of the fundamental, namely 3F, both connected, (together with the receiver tuned at the fundamental frequency F present also in systems prior to the present invention and well known to a person skilled in the art), to a single subsystem for the processing of the received signals capable of processing the raw signals, i.e. the replies on the second and/or the third harmonic; coming from the pertaining receivers and to provide the localisation of the moving cars and of the fixed points, provided with suitable devices called responders, preferably on the sides of the road pavement. Such processing subsystem utilises the usual radar measurement technique well known to persons skilled in the art exploiting the high precision of the system deriving from the use of repliers, also known as "radar retroreflectors", installed aboard of vehicles and fixed obstacles (such as the guard-rails) and the absence of interference between the signals sent by the radar and the signal coming from the targets (cars, obstacles) of interest, being these latter at a different wavelength.
B) Devices, that, in the preferred embodiment are passive and identified as repliers or "radar retroreflectors" to be installed on the vehicle, preferably in a number from one to four and in the positions forward, left side, right side) or in fixed points of the road or highway. Said devices all functionally equivalent are constituted each of a receiver on the fundamental frequency, by a transmitter on the second harmonic of the radar waveform received at the fundamental frequency F, and finally by the pertaining pair of antennas, the whole to be installed aboard of vehicles preferably in a non visible way such as for instance at the interior of a projector assembly. The repliers may be realised with techniques known to persons skilled in the art, such, for instance, the use of a non-linear circuit elements for producing the harmonics.
C) Devices identified as repliers or "radar retroreflectors" operating on the same principle of those of the paragraph B) preceding, constituted each of a receiver on the fundamental frequency, by a transmitter on the third harmonic of the radar waveform received at the fundamental frequency F, and finally by the pertaining pair of antennas, to be installed on fixed obstacles such as for instance on the guard rails at fixed intervals, or on the vehicle, as disclosed in the paragraph B) above.

In the application against collisions in the field of cars, the signals coming from the repliers aboard of the vehicles, (vehicles which are defined as co-operating in that they are provided of responders), or by the fixed obstacles, also provided with repliers, are received by the radar, identified as "master", by the vehicle equipped and allowed control of the forward traffic with respect to the equipped vehicles also in case of fog or in any case with insufficient visibility, just for avoiding the collision with other vehicles or with fixed obstacles.

In the application of counting and classification of vehicles, and the measurement of their speed, in respect of the handling of traffic, in particular also in conditions of fog or in any case of insufficient visibility, the signals coming from the responders aboard of the automobiles (co-operating in that provided with responders) are received by the radar, defined as "master", installed on suitable fixed points (trussed poles, simple poles and the like) and allow the detection, the counting, the measurement of the position and from it of the speed and the classification of the vehicle, the class of kind of the vehicle being derivable from the number and the relative distance of the responders installed on the vehicle.

The figures of the drawings attached to the present description as illustrative and not limitative aim are the following:

Figure 1: a general schematic diagram of the vehicular anticollision system for the improvement of the safety, surveillance and control, object of the present invention.

Figure 2: schematic diagram of the " master" radar which constitutes a part of the present invention.

Figure 3: a schematic of the "responder" or "radar retroreflector" which constitutes a part of the present invention, in the embodiment with two antennas for anticollision purposes.

Figure 4: a schematic of the "responder" or "radar retroreflector" which constitutes a part of the present invention, provided with a identification code of the vehicles in order to maintain the correctness of the road traffic.

The present invention will be now disclosed with reference to presently preferred embodiments referred to only by way of illustration and not as a limitation and on the basis of the figures of the attached drawings. The disclosure that follows refers to the application to the avoidance of the collision in the field of automobiles, with a "master" radar aboard of the vehicle.

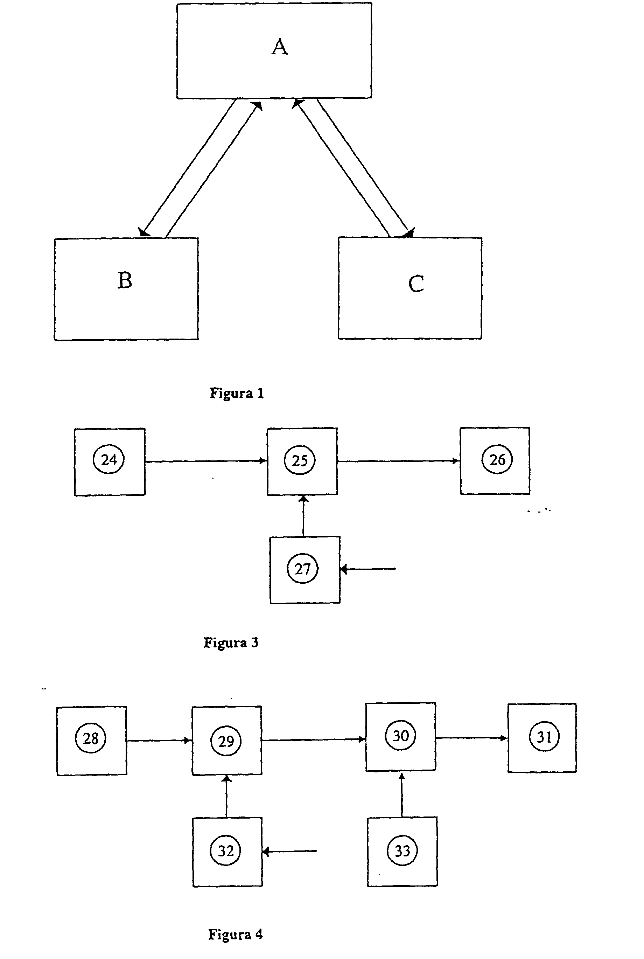

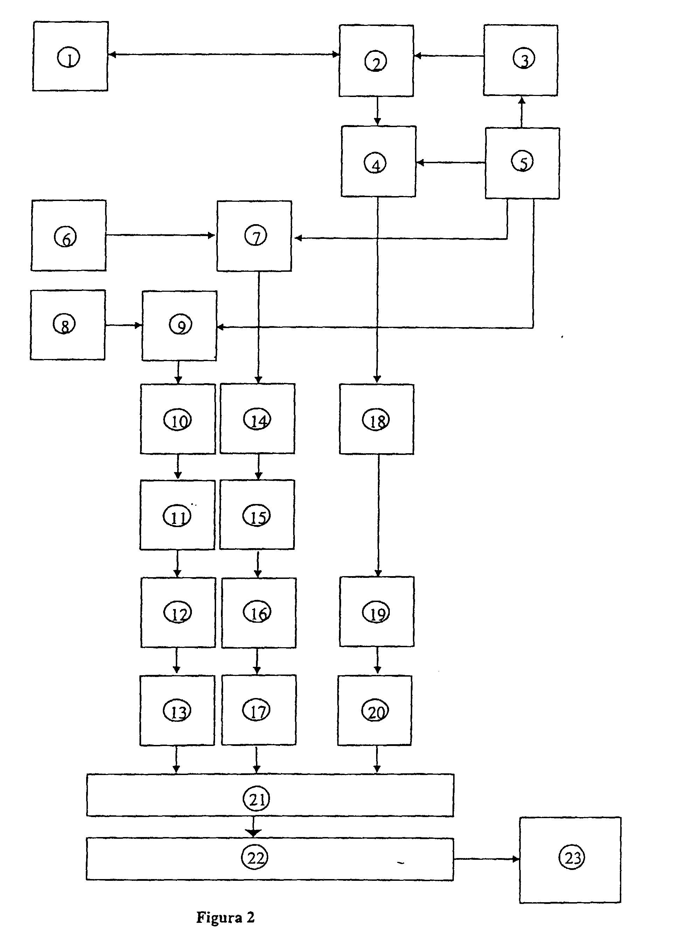

In particular Figure 1 is the general schematic of the invention. In said Figure the block A) indicates the utilised sensor, which is a radar (disclosed in the preceding paragraph A) characterised by reduced dimensions with respect to the state of the art and with limited weight and cost, capable of receiving besides the frequency of the transmitted signal also the second and the third harmonic of the transmitted frequency (or harmonics of a higher order according to the embodiment selected).

Such sensor is installed in a fixed and preferably not visible on the car, preferably on the front part thereof. The block B indicates a responder operating on the second harmonic of the radar signal transmitted by the block A; said responder is preferably installed on co-operating vehicles in order to perform a surveillance of the traffic, operations against collisions, and guidance. The block C indicates a responder operating on a third harmonic of the signal transmitted by the block A; said responder is preferably installed on fixed obstacles for the purposes of avoiding collisions and guidance.

In Figure 2 there is shown the schematic diagram of the "master" radar sensor, block A of Figure 1, which constitutes an essential element of the present invention, which will be now disclosed with reference to presently preferred embodiments thereof referred to as an illustration and not a limitation.

The "master" radar is constituted by a solid state transmitter (block 3), which generates the waveform at the fundamental frequency, and that by means of the well known duplexer, (block 2), sends it to the main antenna (block 1) which realises with well known techniques the optimal diagram of radiation for the application in question. The radar echo at the fundamental frequency F is received by the main antenna (block 1) and it is sent, through the duplexer (block 2) according to techniques well known to persons expert in the field (and disclosed, among others, in the book
[4] M.I. Skolnik "Introduction to the radar systems", McGraw Hill, 2^{nd} Edition, Chapter 9, Pages 359-366),
at the pertaining receiving chain tuned on the fundamental frequency (block 4) for its conversion in baseband by means of a local oscillator (block 5) with well known techniques. The radar echo in baseband, present at the output of the block 4, after having been digitalised (block 18) with techniques well known to persons skilled in the art, is sent to the target detector (block 19); such detector comprises at its interior a detection threshold that in the preferred embodiment is of the adaptive kind with respect to the environment, according to a known radar technique, which provides for each cell of resolution of the radar, an estimate of the average level of the noise; such estimate multiplied by a suitable parameter provides the detection threshold which is utilised for the particular resolution cell; in the present invention the detection of useful targets, with respect to the state of the art preceding the present invention, is much simplified by the innovative use of the reception channel on the second harmonic dedicated to the reception of the sole signals produced by autovehicles, and that on the said harmonic dedicated to the reception of the sole signals produced by fixed obstacles. The detection data are transferred to the extractor for the radar signals (block 20) which correlates such indications with those of current range and azimuth using techniques well known to persons skilled in this field and providing at the output data directly in rectangular co-ordinates according to a Cartesian reference frame fixed with respect to the surveillance area. The just disclosed chain constituted of blocks 18, 19 and 20 has the purpose of processing the sole radar echo, i.e. the signal received at the fundamental frequency, representing the whole environment which exists before the autovehicle, in particular the accidental obstacles.

The radar signal retransmitted by the responders on the second harmonic, after having been received by the pertaining antenna (block 6), is sent to the pertaining receiving chain (block 7) tuned on the second harmonic of the fundamental frequency transmitted by the "master" radar for its conversion in baseband by means of a local oscillator (block 5) with well known techniques. The baseband signal present on the output of the block 7, is digitalised (block 14) with techniques well known to persons skilled in the art, and it is sent, to a circuit for the extraction of a possible added code (block 15), to the target detector (block 16), that even if performing the same functions of the block 19 is simplified by the fact that there is not present the noise constituted by clutter. The indications of the detection are transferred to the extractor of the radar data (block 17) functionally equivalent to the extractor of the radar data (block 17) functionally equivalent to the block 20. The chain constituted of the blocks 14, 15, 16 and 17 has therefore the purpose of processing the signals produced by the responders installed aboard of the vehicle which is forward or at a side.

The radar signal retransmitted by the responders on the third harmonic, after having been received by the pertaining antenna (block 8), is sent to the receiving chain (block 9) tuned on the third harmonic of the fundamental frequency transmitted by the "master" radar for its conversion in baseband by means of a local oscillator (block 5) with well known techniques. The signal in baseband present on the output of the block 9 is digitalised (block 10) with techniques well known to persons skilled in the art, and it is sent, through a circuit for the extraction of the possible added code (block 11) to the target detector (block 12) which even if performs the same functions of the block 19, is simplified (as the block 17) by the fact that no clutter is present. The detection data are transferred to the radar data extractor (block 13) functionally equivalent to the block 20.

The chain constituted of the blocks 10, 11, 12 and 13 has therefore the purpose of processing the signals transmitted by the master radar and reflected on the third harmonic by devices installed on fixed obstacles such as, for instance, the protection elements such as "guard-rails" present on the sides of a road.

The outputs of the several radar data extractors (blocks 13, 17, 20), are sent to the combiner of the radar data (block 21) which in the common frame of reference abovementioned combines the information coming from the several receivers, eliminates the effects of noise caused by undesired echoes and to the noise thanks to the use of the second and of the third harmonic, and provides on its output unique indication of presence of echoes coming from targets of interest (cars, other vehicles, obstacles) through elementary logic operations well known to a person skilled in the art. The unique detections obtained in this way are transferred to the global extractor of the radar data (block 22) which by means of techniques well known to the experts, produces digital messages, hereinafter identified as "plots" which indicate the position of the objects of interest (cars, automobiles, road obstacles and side tracks of the roads). This data will be then displayed by means of a suitable display (block 23) that may be realised with known techniques.

In Figure 3 there is shown the general schematic diagram of the radar responders operating on the second harmonic (block B of Figure 1) or third harmonic (Block C of Figure 1) which constitute both essential elements of the present invention.

The schematic diagram of the responders will be now disclosed with reference to presently preferred embodiments thereof referred to as an illustration and not as a limitation.

The radar responder is constituted of an antenna (block 24), which with well known techniques, may be realised for instance according to the horn type or the microstrip type. This antenna receives the fundamental frequency transmitted by the "master" radar realising the optimum radiation diagram for the application in question; the signal received by this antenna is sent to a multiplier circuit (block 25), that may be set up with known techniques by means of diodes or other non-linear components; said circuit multiplies the fundamental frequency F by two in the case of the second harmonic (block B) or by three in the case of the third harmonic (block C); said frequency multiplied signal is sent to an antenna (block 26) , that with well known techniques may be realised for instance according to the horn type or the microstrip type; said antenna transmits the second harmonic (block B) or the third harmonic (block C) which will be received by the "master" radar, as it is disclosed in Figure 2 and in the preceding paragraph A. The block 27 receives (with techniques well known to persons skilled in the art) by a command and control unit an enabling signal, that allows to render active or render non active the "responder" when it is necessary for the handling of the traffic, and consequently operated on the block 25.

In Figure 4 there is shown another embodiment of the responder of the second harmonic that allows to perform besides the functions above described, the function of identification of the vehicles, in order to allow the enforcement of the regulations on the road traffic, and for monitoring. In such realisation (embodiment) the signal retransmitted by the responder is encoded, utilising techniques well known to persons skilled in the art, according to a code associated to the vehicle, for instance the one of its license plate. In Figure 4 there are present, besides the blocks 28, 29, 31 and 32, which have respectively the same functions of the block 24, 25, 26 and 27 shown in Figure 3, the block 30 that encodes and modulates, according to well known techniques, the waveform to be transmitted and the block 33 which records the code of the vehicle and provides it to the block 30. The responder shown in Figure 4 is also realised with operation on the third harmonic of the transmitted signal for the installation on a fixed place; in such realisation the code, recorded on the block 33, identifies particulars of interest (for instance a situation of a dangerous turn, a road pavement in bad conditions and the like), and/or indication of preferred routing, which are detected by the radar installed aboard of the automobile in order to give a alarm to the driver, improving the safety of the driving.

The embodiments may be modified with respect to what has been described and shown above, without departing from the scope of the present invention, as it is defined by the following claims.

## Claims

1. A radar system for the detection, localisation, classification and identification of co-operating vehicles and of fixed obstacles, suitable for improving the safety and the efficiency/operativeness of the surveillance and the control of the road traffic, characterised in that it uses the combination of active radars (A) and of signal responders (B, C); the signal responders receiving the signal transmitted by said active radar (A) (identified also as "master") on a fundamental frequency and retransmitting it on the second harmonic or on the third harmonic.

2. A radar system according to claim 1, characterised in that each responder for retransmitting the signal on the second harmonic or on the third harmonic uses a wideband antenna.

3. A radar system according to the preceding claims, characterised in that each responder, when installed aboard of a vehicle, transmits on a different harmonic with respect to when it is installed on a fixed placement.

4. A radar system according to the preceding claims 1 and 2, characterised in that each responder transmits to the second harmonic when installed aboard of a vehicle and the third harmonic when installed on a fixed location.

5. A radar system according to the preceding claims, characterised in that it utilises responders that retransmit on harmonics of the operating frequency of the "master" radar, also of an order higher than the third.

6. A radar system according to the preceding claims, characterised in that each "master" radar is provided with a processing subsystem for the detection, localization and classification of the fixed or moving obstacles, that is based on the signals retransmitted by the responders and on the radar echo.

7. A radar system according to the preceding claims, characterised in that it uses when receiving the signals retransmitted on the second and the third harmonic in order to avoid problem of radar disturbances or noise such as "clutter".

8. A radar system according to the preceding claims, characterised in that each radar signal responder uses a non-linear element for producing the second or the third harmonic of the received radar signal, or a higher order harmonic.

9. A radar system according to the preceding claims, characterised in that it may be used for the monitoring of the traffic present on one or more road lanes using a master radar installed on a fixed external location, for the localization, the measurement of the speed and the classification of vehicles also in conditions of insufficient visibility.

10. A radar system according to the preceding claims 1, 2, 3, 4, 5, 6, 7 and 8, characterised in that it allows to detect fixed targets (road side track) utilising a responder installed on said targets that operates on a frequency that is a multiple of the one of the radar; in particular the responder operates on the second harmonic.

11. A radar system according to the preceding claims, characterised in that it is capable of detecting the moving targets (vehicles and cars of any kind) using a responder which operates on a frequency that is a multiple of the one transmitted by the radar and different from the one used for the detection of fixed targets.

12. A radar system according to the preceding claims 1, 2, 3, 4, 5, 6, 7, and 8, characterised in that it is capable of detecting obstacles also in the absence of responders using the radar echo, and discriminating in this way such obstacles from the other objects provided with a responder.

13. A radar system according to the preceding claims, characterised in that to the waveform retransmitted by the responders there are added identification codes associated to the data of the vehicle, allowing to the authorities entrusted with the surveillance of the traffic and to the public order to perform the measurement of the kynematic parameters of the travelling vehicle and the consequent check of the possible breaches of the road code.

14. A radar system according to the preceding claims, characterised in that it is used for the guidance of moving means also different from the vehicles carrying aboard the "master" radar, which localises fixed points along the assigned path by means of which, being said points provided with responders, there is identified the path to be followed also under conditions of bad visibility.

15. A radar system according to claim 14, characterised in that in the presence of branching, - or more generally multiple branchings - of the path, the responders are energised upon control from the centralised station to allow to the vehicle to identify a particular path to be followed, among the possible ones.

16. A radar system according to the preceding claims, characterised in that the responders installed on fixed stations are provided with a code that, read by the vehicle provided with radar, identifies danger situations for said vehicle.
